(19) **Europäisches Patentamt / European Patent Office / Office européen des brevets**

(11) **EP 2 062 861 B1**

(12) **EUROPEAN PATENT SPECIFICATION**

(45) Date of publication and mention
of the grant of the patent:
**11.09.2013 Bulletin 2013/37**

(21) Application number: **07791255.8**

(22) Date of filing: **25.07.2007**

(51) Int Cl.:
*C03C 17/32* (2006.01)    *B32B 27/18* (2006.01)
*B32B 27/40* (2006.01)    *C09D 175/08* (2006.01)
*C09K 3/00* (2006.01)    *C08G 18/48* (2006.01)
*C08G 18/40* (2006.01)    *C08G 18/66* (2006.01)
*C08G 18/42* (2006.01)    *C08G 18/78* (2006.01)

(86) International application number:
**PCT/JP2007/064537**

(87) International publication number:
**WO 2008/023526 (28.02.2008 Gazette 2008/09)**

(54) **NON-FOGGING ARTICLES AND COATING FLUID FOR THE ARTICLES**

BESCHLAGSCHUTZGEGENSTÄNDE UND BESCHICHTUNGSFLUID FÜR DIE GEGENSTÄNDE

ARTICLES ANTI-BUEE ET FLUIDE DE REVÊTEMENT POUR LES ARTICLES

(84) Designated Contracting States:
**DE FR GB**

(30) Priority: **23.08.2006 JP 2006227004**
**24.04.2007 JP 2007113873**

(43) Date of publication of application:
**27.05.2009 Bulletin 2009/22**

(73) Proprietor: **CENTRAL GLASS COMPANY, LIMITED**
**Ube-shi, Yamaguchi 755-0001 (JP)**

(72) Inventors:
• **KANEDA, Takeyuki c/o Glass Research Center**
**Matsusaka-shi, Mie 515-0001 (JP)**

• **ITAKURA, Nobuyuki c/o Glass Research Center**
**Matsusaka-shi,Mie 515-0001 (JP)**

(74) Representative: **Manitz, Finsterwald & Partner**
**GbR**
**Martin-Greif-Strasse 1**
**80336 München (DE)**

(56) References cited:
**EP-A1- 1 801 174**    **WO-A1-2004/013063**
**JP-A- 04 036 376**    **JP-A- 2002 155 159**
**JP-A- 2003 073 147**    **JP-A- 2003 073 652**
**JP-A- 2003 119 451**    **JP-A- 2005 187 276**
**JP-A- 2005 200 617**    **JP-A- 2006 104 005**
**US-A- 4 609 688**

**Description**

**TECHNICAL FIELD**

The present invention relates to an article with improved antifogging property in the long term, and more preferably it relates to an article that is capable of easily regaining antifogging property even if antifogging property lowers in use.

**BACKGROUND OF THE INVENTION**

Fogging occurring on a base member surface of glass or other articles is generated by a condensation phenomenon in which uncountable minute water drops occur on the base member surface. To prevent this fogging, a hydrophilic film that turns uncountable minute water drops occurring on the base member surface into a uniform water film, a water absorbing film that takes water drops into the film, etc. have been formed on base members.

For example, it is disclosed in Patent Publication 1 to improve hydrophilicity of a glass surface by applying a surfactant superior in hydrophilicity to a base member. Furthermore, Patent Publications 2 and 3 disclose a hydrophilic member in which a film having a minute roughness shape is formed on a base member to prolong retention of an applied hydrophilic chemical species, and the chemical species, such as surfactant, superior in hydrophilicity is retained on the roughness section.

US 4,609,688 discloses a coating or film having anti-lacerative or self-healing properties comprising a transparent, highly elastic, heat-setting three-dimensionally cross-linked polyurethane and at least one surface active agent comprising one or more $C_8$-$C_{16}$ polyethylated fatty alcohols disposed therein.

Patent Publication 1: Japanese Patent Application Examined Publication JP 52-47926 B
Patent Publication 2: Japanese Patent Application Publication JP 11-100234 A
Patent Publication 3: Japanese Patent Application Publication JP 2000-265163 A

**SUMMARY OF THE INVENTION**

Including Patent Publications 1 to 3, etc., hitherto, there have been proposals to improve antifogging property of articles by retaining a surfactant superior in hydrophilicity on the top surface of articles. However, since the retention time of these species on the surface is short, they are quickly eluted from the surface. Thus, there has been a problem that the time for showing antifogging property is short. Therefore, in order to solve this problem, it is a task in the present invention to provide an article with improved antifogging property in the long term by providing a means for producing an effect in prolonging retention of the chemical species.

The present invention relates to an article with improved antifogging property that shows hydrophilicity, which is characterized in that it has a precursor of the antifogging article, a nonionic surfactant and an amphoteric surfactant, wherein the precursor of the article has a base member and a film that is formed on the base member and comprises a urethane resin having an oxyethylene chain, wherein the nonionic surfactant having an oxyethylene chain and the amphoteric surfactant are contained in the film comprising the urethane resin, and wherein the film has a water absorption percentage of 10-40 wt%.

In order to provide a means for solving the task in the present invention, a study was conducted on a film structure and the like that make it possible to retain surfactant in the film for a long time. Then, as one technique to prolong retention, we have reached a conception to make surfactant and a film supporting this have analogous chemical structures.

In the present invention, a film on a base member that constitutes an antifogging article comprises a urethane resin, and this urethane resin has oxyethylene chain in order to show water-absorbing property. Of surfactants, a nonionic surfactant having oxyethylene chain has a structural unit of the same type. Therefore, the urethane resin in the present invention has a high affinity with the nonionic surfactant.

However, it has become clear by the study in the present invention that an attention to the following is necessary upon introducing the nonionic surfactant into the film. That is, in case that a coating liquid having the nonionic surfactant is applied to the film in order to retain the nonionic surfactant species in the film, depending on the type of the nonionic surfactant, there is a case in which hydroxy groups in the nonionic surfactant face the base member, thereby not providing the film with hydrophilicity.

Thus, in the present invention, we have reached a conception to introduce a surfactant that has a high affinity with the urethane resin or a conception to make hydroxy groups themselves of the nonionic surfactant tend to face an outward direction of the film, as a means for supporting in the film for a long time a surfactant that contributes to showing of hydrophilicity of the film, by using a finding that a nonionic surfactant supported in the urethane resin is not easily eluted from the film.

Then, an idea that is a basis of these conceptions is represented by an idea of a precursor of an article for obtaining an antifogging article that shows hydrophilicity. That is, in the present invention, a precursor of an antifogging article refers to one, which has a base member and a film that is formed on the base member and comprises a urethane resin having an oxyethylene chain having a water absorption percentage of 10- 40 wt%, and in which a nonionic surfactant having an oxyethylene chain is supported in the film comprising the urethane resin. More preferably, in the case of supporting an amphoteric surfactant, the pre- antifogging article refers to one having a capability to support the amphoteric surfactant in the film for a long time. This capability is explained in detail in Evaluation Item 2 in Examples.

Depending on the degree of hydrophilicity of the surface of the precursor, the precursor itself may be handled as an antifogging article in some cases. It is preferable that the nonionic surfactant further has hydroxy groups.

An antifogging article of the present invention is an antifogging article having the precursor including the nonionic surfactant and an amphoteric surfactant, and it is **characterized in that** the amphoteric surfactant is supported in a film comprising the urethane resin, thereby showing hydrophilicity.

Amphoteric surfactant has both of cation site and anion site in the molecule and has a higher polarity as compared with that of the nonionic surfactant. Therefore, since the amphoteric surfactant has a high affinity with water, it can provide hydrophilicity of the film by its incorporation into the film. However, in case that amphoteric surfactant alone is supported in the film under a condition that nonionic surfactant is not supported in the film, the surfactant tends to be washed away when a water film is formed on the film.

Thus, in the antifogging article, two types of surfactants, a nonionic surfactant having oxyethylene chain and an amphoteric surfactant, are supported in the film. By the existence of these two kinds of surfactant, there occur a showing of good antifogging property due to that anion site in the molecule of the amphoteric surfactant turns to have affinity with water, and an effect that cation site of the surfactant is supported together with both of the nonionic surfactant and oxyethylene chain forming the urethane resin.

In the antifogging article, cation site of the amphoteric surfactant is supported on the nonionic surfactant that is hardly eluted from the film. Therefore, the amphoteric surfactant is hardly eluted from the film. As a result, persistence of antifogging property of the antifogging article improves.

Preferably, the antifogging article has the precursor and a nonionic surfactant of a HLB value (Hydrophile-Lipophile Balance value) of 9- 14 having hydroxy group and oxyethylene chain, and the nonionic surfactant where the HLB value is 9- 14 is supported in the film comprising the urethane resin. With this, it may be used as an antifogging article showing hydrophilicity. When a nonionic surfactant where HLB value is 9- 14 is incorporated into the film, the surfactant is disposed in the film under a condition that hydroxy groups in the surfactant face the outside of the film, not facing the side of the base member.

In an antifogging article of the present invention, furthermore, it is preferable that all of the nonionic surfactants supported in the film have hydroxy groups and that their HLB value is 9-14. The antifogging article of this form can be an article showing hydrophilicity under a condition of the pre-antifogging article. In case that hydrophilicity is shown under a condition of the pre-antifogging article, this may be applied to an antifogging article.

It is efficient to produce an antifogging article of the present invention by a production process comprising the step of forming on a base member a film comprising a urethane chain having an oxyethylene chain having a water absorption percentage of 10-40wt%; and the step of introducing a nonionic surfactant having an oxyethylene chain and an amphoteric surfactant at the same time or successively into the film.

In view of the production efficiency, it is more preferable to introduce all kinds of the surfactants at the same time into the film. Introduction of the surfactant into the film can be conducted by applying the surfactant onto the film. As an application liquid for providing the film with hydrophilicity, the application liquid is preferably one having a nonionic surfactant having an oxyethylene chain and an amphoteric surfactant.

Furthermore, a preferable application liquid for obtaining an antifogging article of the present invention is one to be applied to the film and is one having a nonionic surfactant having an oxyethylene chain and an amphoteric surfactant.

An antifogging article in the present invention refers to one having good hydrophilicity. It refers to one in which, when a water drop of $2\mu l$ has been left at rest on the film, the contact angle of the water drop on the film is 15° or less, preferably 8° or less, more preferably 5° or less by the measurement by a method based on "JIS R 3257, "WETTABILITY TEST METHOD OF SUBSTRATE GLASS SURFACE", (1999)". The antifogging article having an amphoteric surfactant tends to make the contact angle of a water drop on the film 8° or less, more preferably 5° or less. Therefore, we can say that it is an antifogging article of a more preferable form.

## DETAILED DESCRIPTION

In an antifogging article of the present invention, the surfactant for providing the article with hydrophilicity is hardly eluted from the film, thereby showing an effect in the use of the antifogging article for a long time. Even in case that the surfactant for providing the article with hydrophilicity has been eluted, it is possible to easily supply the surfactant to the film by means such as application. Therefore, regain of antifogging property of the article is also easy.

An antifogging article of the present invention has water absorbing property and is superior in hydrophilicity. Therefore, it can rapidly show antifogging property in an environment of usage where the change of the amount of water vapor is very large, such as undressing room of mist sauna.

As a base member used in an antifogging article of the present invention, soda-lime glass is used as a typical one. This glass is a glass used in general for automotive, architectural and industrial glasses, etc. It is produced by float method, duplex method, roll out method, etc.

As the glass type, it is possible to use various colored glasses such as green, bronze, etc. as well as clear; various functional glasses such as UV and IR cutting glasses, electromagnetic shielding glass, etc.; glasses usable as fireproof glass such as wired glass, low expansion glass, zero expansion glass, etc.; tempered glass and its analogous glasses, laminated glass, double glazing, etc.; and various glass products such as mirror prepared by silvering method or vacuum film forming method, flat plate, curved plate, etc. Although the plate thickness is not particularly limited, it is preferably 1.0mm to 10mm. For vehicular use, it is preferably 1.0mm to 5.0mm.

It is possible to use not only the above glasses, but also resin film such as polyethylene terephthalate, resin such as polycarbonate, metal (particularly metal mirror), ceramics, etc.

An application liquid (hereinafter a film-forming application liquid) that is obtained by mixing a chemical species having isocyanate group (NCO group) and a polyol having active hydrogen group and that is for forming "a film comprising a urethane resin having an oxyethylene chain of a water absorption percentage of 10-40 wt%" is applied to the outermost surface of the base member, and then a heating is conducted at 80°C-140°C for 10 minutes to 60 minutes, thereby curing the film. With this, the film comprising the urethane resin of a water absorption percentage of 10-40 wt% is obtained.

The application method of the film-forming application liquid can be conducted by a publicly known method such as roller coating, dip coating, coating with brush, spray coating, bar coating, knife coating, die coating, spin coating, curtain coating, coating with hands, etc. After the application, a heating is conducted at 80°C-140°C for 10 minutes to 60 minutes, thereby drying solvent in the application liquid to form a film.

According to need, it is possible to add a surfactant for providing the film with hydrophilicity, an organic tin compound as curing catalyst, a filler component, and diluting solvent, in addition to antifogging urethane components of a chemical species having NCO group and polyol, to the film-forming application liquid. As the surfactant, it is optional to use a surfactant having a hydroxyl group, amino group or mercapto group that is capable of reacting with NCO group. Preferably, the application liquid is prepared by mixing a chemical species having NCO group with a mixture of polyols.

As a chemical species having NCO group, it is possible to use a diisocyanate, preferably a trifunctional polyisocyanate having a biuret and/or isocyanurate structure using hexamethylenediisocyanate as the starting material. This material has weather resistance, chemical resistance and thermal resistance and is effective particularly for weather resistance. Besides this material, it is possible to use diisophoronediisocyanate, diphenylmethanediisocyanate, bis (methylcyclohexyl) diisocyanate, toluenediisocyanate, etc.

As the polyol, it is possible to use a water absorbing polyol of oligomer for making the film show antifogging property due to water absorbing property. The water absorbing polyol is one having a property to swell by absorbing water, and hydroxy group in the molecule reacts with isocyanate group of isocyanate prepolymer to produce urethane bond. Therefore, it is possible to introduce water absorbing property into the urethane resin. The water absorbing polyol may have a water-soluble property.

In order to make the film show the effect of antifogging property due to water absorbing property, it is preferable to adjust the amount of the water absorbing polyol used to have a suitable amount of the water absorbing component derived from the water absorbing polyol in the film so that water absorption percentage upon water absorption saturation of the film becomes 15 wt% or greater. As the water absorbing component, it is possible to use one derived from an oxyalkylene-series polyol. It is preferable to have oxyethylene chain, oxypropylene chain, etc. It is particularly preferable to have an oxyethylene chain superior in water absorbing property.

If the water absorption percentage is too high, the film tends to become low in water resistance, hardness, wear resistance, etc. Therefore, it is preferable to make an adjustment so that water absorption percentage of the film becomes 30 wt% or less.

As the oxyalkylene-series polyol, it is preferable to use one having a number average molecular weight of 400-5000. In case that number average molecular weight is less than 400, it becomes low in the capability to absorb water as bound water. In case that number average molecular weight exceeds 5000, strength of the film tends to lower. In view of water absorbing property, film strength, etc., the average molecular weight is more preferably 400-4500. As the polyol, it is possible to use a copolymer polyol of oxyethylene/oxypropylene, polyethylene glycol, etc. In the case of using polyethylene glycol, number average molecular weight is preferably 400-2000, in view of water absorbing property and strength of the film to be obtained.

In addition to the above water-absorbing polyol, it is possible to use hydrophobic polyol, a short-chain polyol having a number average molecular weight of 60-200, etc. as the polyol. The hydrophobic polyol is preferably a polyesterpolyol having a number average molecular weight of 500-2000 or an acrylic polyol having a number average molecular weight of 2000-4000, which has both flexibility and scratch resistance, does not tend to lower the function of water-absorbing property and the function of hydrophilicity of the film, and as a result can improve water resistance and wear resistance of the film.

In the case of polyesterpolyol, if number average molecular weight is less than 500, the film becomes excessively compact and lowers in wear resistance. On the other hand, if it exceeds 2000, film-forming property of the application agent becomes inferior, and it becomes difficult to form the film. Furthermore, in view of compactness of the film to be obtained, the number of hydroxy groups of the polyol is preferably 2 or 3. As the polyesterpolyol, it is possible to use any of polycarbonatepolyol, polycaprolactonepolyol, and a mixture of these.

In the case of acrylicpolyol, if number average molecular weight is less than 2000, wear resistance of the film tends to lower. If it exceeds 4000, applicability of the application agent becomes inferior, and the formation of the film tends to become difficult. Furthermore, in view of compactness and hardness of the film, the number of hydroxy groups of the polyol is preferably 3 or 4.

A hydrophobic component derived from these hydrophobic polyols is introduced so that water absorption percentage of the film and the water drop contact angle are in the above ranges. Preferably, it is introduced so that pencil hardness of the film obtained based on "JIS K 5400" is HB to F upon water absorption saturation of the film.

A component derived from the short-chain polyol increases hardenability of the application agent and has a role for improving strength of the film and an effect of lowering the static friction coefficient of the film surface. The number of hydroxy groups of the short-chain polyol is preferably 2 or 3. In case that the hydroxy group is 1, the short-chain polyol does not become a skeletal component of the film. Therefore, the film becomes brittle. If it exceeds 3, reactivity is excessive in activity, and thereby the application agent tends to become unstable.

As the short- chain polyol, it is possible cite alkylpolyols such as ethylene glycol, propylene glycol, 1, 3- propanediol, 1, 2- butanediol, 1, 3- butanediol, 1, 4- butanediol, 2, 3- butanediol, 1, 5- pentanediol, 2- butene- 1, 4- diol, 2- methyl- 2, 4- pentanediol, 2- ethyl- 1, 3- hexanediol, diethylene glycol, dipropylene glycol, triethylene glycol, glycerol, 2- ethyl- 2- (hydroxymethyl)- 1, 3- propanediol, 1, 2, 6- hexanetriol, and 2, 2'- thiodiethanol; and alkanolamines such as diethanolamine and triethanolamine. It is possible to use those singly or in mixture or their copolymers having average molecular weights not exceeding 200, and the like. A component derived from the short- chain polyol can be introduced so that water absorption percentage and water drop contact angle of the film are in the above ranges. In the case of introducing it, the short- chain polyol is preferably in 2.5 wt% to 10 wt% relative to the total amount of the water- absorbing urethane component.

If the water absorbing film has a water absorption percentage of less than 10 wt%, fogging occurs only by blowing a small amount of water vapor (exhaled air, etc.) due to low antifogging property. In contrast, in case that it is greater than 40 wt%, it turns into strength insufficiency in practice. Therefore, it was made to fall in a range of 10-40 wt%. Furthermore, if the film thickness is thin, the amount of water absorption is small. Therefore, similar to one having a water absorption percentage of less than 10 wt%, fogging occurs only by blowing a small amount of water vapor (exhaled air, etc.). If the film thickness is large, it is difficult to have a uniform film thickness, and visual distortion tends to occur. Therefore, it is preferable to make the film thickness in 1-50$\mu$m.

It is possible to prepare an application liquid for providing hydrophilicity for the purpose of introducing the surfactants into the film by mixing together solvent, a nonionic surfactant having oxyethylene chain, and an amphoteric surfactant.

The solvent is preferably one that dissolves the surfactants to be used, that is absorbed into the film under a condition that the surfactants are dissolved, and that separates from the surfactants in the evaporation process and is emitted into the outside of the film. Water, alcohols, ketones, ethers, esters, polyhydric alcohols are preferably used.

As the water, it is possible to use purified water, ion-exchanged water, etc. As the alcohols, it is possible to use isopropyl alcohol, ethyl alcohol, etc. As the ketones, it is possible to use acetone, acetone alcohol, acetoin, diacetone alcohol, benzoin, etc. As the ethers, it is possible to use tetrahydrofuran, isopropyl ether, ethyl ether, etc. As the esters, it is possible to use isobutyl acetate, butyl acetate, etc. As the polyhydric alcohols, it is possible to use ethylene glycol, ethylene glycol diacetate, ethylene glycol diethyl ether, etc.

As the nonionic surfactant having oxyethylene chain, it is possible to use polyoxyethylene lauryl ether, polyoxyethylene tridecyl ether, polyoxyethylene alkyl ether, polyoxyethylene oleyl ether, polyoxyethylene cetyl ether, polyoxyethylene hydrogenated castor oil, polyethylene glycol monooleate, polyethylene glycol dioleate, polyethylene glycol monostearate, ethylene glycol distearate, polyethylene glycol distearate, etc.

As the amphoteric surfactant, it is possible to use lauryl dimethylamine oxide, coconut oil alkyl dimethyl amine oxide, myristamide propyl hydroxy sulfobetaine, lauryl hydroxy sulfobetaine, 2- alkyl- N- carboxymethyl- N- hydroxyethylimidazoliumbetaine, sodium N- lauroyl- N'- carboxymethyl- N'- hydroxyethylethylenediamine, coconut oil alkyl betaine, lauryl dimethyl aminoacetic acid betaine, etc.

In the ratio of the nonionic surfactant having oxyethylene chain to the amphoteric surfactant, it is preferable that the amount of the amphoteric surfactant is 0.2 to 5 times, preferably 0.3 to 3 times, more preferably 0.5 to 2 times, that of the nonionic surfactant by weight ratio.

As a method for applying the application liquid for providing the film with hydrophilicity onto the film, it is possible to take any method according to ordinary method, such as roll coating, dip coating, brush coating, spray coating, bar coating, knife coating, die coating, spin coating, curtain coating, hand coating, etc. It is applied onto the base member, followed by air drying at room temperature for about 24 hours or heating at 80°C to 140°C for 10 minutes to 60 minutes.

EXAMPLE 1

1. PREPARATION OF FILM FORMED OF URETHANE RESIN HAVING WATER-ABSORBING PROPERTY

A film-forming application liquid was prepared on the top surface of the base member by the following procedure. There were mixed together 0.95g of polycaprolactonediol having an average molecular weight of 1250 (trade name: "PLACCEL L212AL" made by DAICEL CHEMICAL INDUSTRIES, LTD.), 0.47g of ethylene glycol (1st grade, made by Kishida Chemical Co., Ltd.), and 3.32g of polyethylene glycol having an average molecular weight of 1000 for providing the resin with water-absorbing property.

To the mixture obtained above, 4.26g of a biuret-type polyisocyanate (made by SUMITOMO BAYER URETHANE, trade name: "N3200") of hexamethylene diisocyanate was added, followed by mixing. Then, it was diluted with diacetone alcohol so that all of the above components were in 30wt%, thereby preparing a film-forming application liquid.

The application liquid was applied by spin coating onto the entire surface on the side opposite to the reflecting layer side of a mirror base member (size: 100mm×100mm×5mm (thickness) ) obtained by silvering a soda- lime glass plate. Then, heating was conducted at 150°C for 60minutes, thereby forming on the base member a film formed of a urethane resin having water- absorbing property. Water absorption percentage of the film was 20%.

The water absorption percentage is one measured by the following procedure. The water absorption percentage was drawn out from the following mathematical formula by the glass weight (A) prior to the application, the sample weight (B) measured by a precision balance immediately after the heating following the application onto the glass, and the sample weight (C) at the time when fogging occurred and distortion of view occurred.

$$\text{WATER ABSORPTION PERCENTAGE} = (C{-}B)/(B{-}A)\times100\ [\%]$$

A primer layer is formed on the glass base member on the side opposite to the reflecting layer side, for improving alkali resistance and adhesion of the article. The primer layer is one obtained by the following procedure. A preparation is conducted by a denatured alcohol (EKINEN F-1, made by Japan Alcohol Trading) formed of 90wt% of ethanol and 10wt% of isopropyl alcohol so that $\gamma$-aminopropyltriethoxysilane (LS-3150, made by Shin-Etsu Silicone) is in 1wt%. To this, zirconium oxychloride octahydrate, which is a hydrolysable zirconium compound, is added so that the amount of zirconium of the zirconium compound becomes 0.0008 times that of silicon of the silicon compound by weight ratio, thereby obtaining a liquid that has a pH of 1.5 and is for obtaining the primer layer. Then, the liquid is applied by wiping the glass base member with a wiper (trade name: "BENKOT", type M-1, 50mm×50mm, made by OZU CORPORATION) formed of cellulose fibers, which has absorbed the liquid, followed by drying under room temperature condition and then washing the coated surface with the wiper by using tap water, thereby obtaining the primer layer.

2. PREPARATION OF APPLICATION LIQUID FOR PROVIDING FILM WITH HYDROPHILICITY AND PREPARATION OF ANTIFOGGING ARTICLE

There were mixed together 3.0g of an amphoteric surfactant (made by TOHO Chemical Industry Co., LTD., product name: "Softamin L", surfactant concentration: 30%), 1.0g of a polyethylene glycol type nonionic surfactant having a HLB value of 12.9 (made by TOHO Chemical Industry Co., LTD., product name: "Pegnol TH-8", surfactant concentration: 100%), and 6.0g of purified water, thereby preparing an application liquid for providing the film with hydrophilicity. The application liquid was applied to the film by wiping the film obtained by the above 1 with a cotton cloth impregnated with the application liquid, followed by standing still for 24 hours. With this, the film having water-absorbing property was provided with hydrophilicity, and an antifogging article was obtained.

EXAMPLE 2

There were mixed together 1.0g of a polyethylene glycol type nonionic surfactant having a HLB value of 12.9 (made by TOHO Chemical Industry Co., LTD., product name: "Pegnol TH-8", surfactant concentration: 100%) and 9.0g of purified water, thereby preparing an application liquid for providing the film with hydrophilicity. A film formed of a urethane resin having water-absorbing property obtained by Example 1 was wiped with a cotton cloth impregnated with the application liquid to apply the application liquid to the film, followed by standing still for 24 hours. With this, the film having water-absorbing property was provided with hydrophilicity, and an antifogging article was obtained.

EXAMPLE 3

There were mixed together 3.0g of an amphoteric surfactant (made by TOHO Chemical Industry Co., LTD., product name: "Softamin L", surfactant concentration: 30%), 1.0g of a polyethylene glycol type nonionic surfactant having a HLB value of 9.7 (made by TOHO Chemical Industry Co., LTD., product name: "Pegnol L-4", surfactant concentration: 100%), and 6.0g of purified water, thereby preparing an application liquid for providing the film with hydrophilicity. The application liquid was applied to the film by wiping the film obtained by the above 1 with a cotton cloth impregnated with the application liquid, followed by standing still for 24 hours. With this, the film having water-absorbing property was provided with hydrophilicity, and an antifogging article was obtained.

EXAMPLE 4

There were mixed together 1.0g of a polyethylene glycol type nonionic surfactant having a HLB value of 9.7 (made by TOHO Chemical Industry Co., LTD., product name: "Pegnol L-4", surfactant concentration: 100%) and 9.0g of purified water, thereby preparing an application liquid for providing the film with hydrophilicity. A film formed of a urethane resin having water-absorbing property obtained by Example 1 was wiped with a cotton cloth impregnated with the application liquid to apply the application liquid to the film, followed by standing still for 24 hours. With this, the film having water-absorbing property was provided with hydrophilicity, and an antifogging article was obtained.

EXAMPLE 5

There were mixed together 3.0g of an amphoteric surfactant (made by TOHO Chemical Industry Co., LTD., product name: "Softamin L", surfactant concentration: 30%), 1.0g of a polyethylene glycol type nonionic surfactant having a HLB value of 15.4 (made by TOHO Chemical Industry Co., LTD., product name: "Pegnol O20", surfactant concentration: 100%), and 6.0g of purified water, thereby preparing an application liquid for providing the film with hydrophilicity. The application liquid was applied to the film by wiping the film obtained by the above 1 with a cotton cloth impregnated with the application liquid, followed by standing still for 24 hours. With this, the film having water-absorbing property was provided with hydrophilicity, and an antifogging article was obtained.

EXAMPLE 6

There were mixed together 3.0g of an amphoteric surfactant (made by TOHO Chemical Industry Co., LTD., product name: "Softamin L", surfactant concentration: 30%), 1.0g of a polyethylene glycol type nonionic surfactant having a HLB value of 8.6 (made by TOHO Chemical Industry Co., LTD., product name: "Pegnol S-4D", surfactant concentration: 100%), and 6.0g of purified water, thereby preparing an application liquid for providing the film with hydrophilicity. The application liquid was applied to the film by wiping the film obtained by the above 1 with a cotton cloth impregnated with the application liquid, followed by standing still for 24 hours. With this, the film having water-absorbing property was provided with hydrophilicity, and an antifogging article was obtained.

EXAMPLE 7

There were mixed together 3.0g of an amphoteric surfactant (made by TOHO Chemical Industry Co., LTD., product name: "Softamin L", surfactant concentration: 30%), 1.0g of a polyethylene glycol type nonionic surfactant having a HLB value of 5.2 (made by AOKI OIL INDUSTRIAL CO., LTD., product name: "BLAUNON CH-302L", surfactant concentration: 100%), and 6.0g of purified water, thereby preparing an application liquid for providing the film with hydrophilicity. The application liquid was applied to the film by wiping the film obtained by the above 1 with a cotton cloth impregnated with the application liquid, followed by standing still for 24 hours. With this, the film having water-absorbing property was provided with hydrophilicity, and an antifogging article was obtained.

EXAMPLE 8

There were mixed together 3.0g of an amphoteric surfactant (made by TOHO Chemical Industry Co., LTD., product name: "Softamin L", surfactant concentration: 30%), 1.0g of a polyethylene glycol type nonionic surfactant having a HLB value of 3.2 (made by AOKI OIL INDUSTRIAL CO., LTD., product name: "BLAUNON BR-404", surfactant concentration: 100%), and 6.0g of purified water, thereby preparing an application liquid for providing the film with hydrophilicity. The application liquid was applied to the film by wiping the film obtained by the above 1 with a cotton cloth impregnated with the application liquid, followed by standing still for 24 hours. With this, the film having water-absorbing property was provided with hydrophilicity, and an antifogging article was obtained.

[PROPERTY EVALUATION OF ANTIFOGGING ARTICLE]

Property evaluations of the antifogging articles were conducted by evaluating the following items. The evaluation results are shown in Table 1.
Evaluation Item 1; Visual evaluation of an image reflected in the mirror when exhaled air has been blown against the film.

Evaluation Item 2; The sample is allowed to stand still at a position of 3cm from the surface of a thermostatic bath set at a water temperature of 43°C in a manner that water vapor blows against the antifogging film, and then there is conducted a visual evaluation of an image reflected in the mirror when it has been moved rapidly into a room temperature of about 25°C. This is defined as one cycle. The evaluation is conducted repeatedly, and the number of the cycles necessary for generating the visual distortion is counted. An article having this number of the cycles of 5 or more, preferably 9 or more, more preferably 10 or more, is judged as good one.

The capability of the pre-antifogging article for supporting the amphoteric surfactant for long time can be judged from the result of the present evaluation. If the above number of the cycles becomes 5 or more, preferably 9 or more, more preferably 10 or more, in the present evaluation conducted on the article supporting both of the nonionic surfactant and the amphoteric surfactant, it is judged that the amphoteric surfactant is well supported in each example.

Evaluation Item 3; The contact angle between the sample and the water drop when a water drop of 2µl has been allowed to stand still on the sample placed horizontally (JIS R 3257, "Wettability Test Method of Substrate Glass Surface", 1999).

[Table 1]

|  | Surfactant Type | Evaluation Item 1 | Evaluation Item 2 | Evaluation Item 3 |
|---|---|---|---|---|
| Ex. 1 | Amphoteric & Nonionic (HLB 12.9) | No occurrence of Visual Distortion | 10 cycles or more | 5° |
| Ex. 2 | Nonionic (HLB 9.7) | Minute water drops cause a slight fogging, but a water film is formed by a continued blowing of exhaled air for several seconds. | 10 cycles or more | 10° |
| Ex. 3 | Amphoteric & Nonionic (HLB 9.7) | No occurrence of Visual Distortion | 10 cycles or more | 5° |
| Ex. 4 | Nonionic (HLB 9.7) | Minute water drops cause a slight fogging, but a water film is formed by a continued blowing of exhaled air for several seconds. | 10 cycles or more | 10° |
| Ex. 5 | Amphoteric & Nonionic (HLB 15.4) | No occurrence of Visual Distortion | 10 cycles or more | 5° |
| Ex. 6 | Amphoteric & Nonionic (HLB 8.6) | No occurrence of Visual Distortion | 10 cycles or more | 5° |
| Ex. 7 | Amphoteric & Nonionic (HLB 5.2) | No occurrence of Visual Distortion | 10 cycles or more | 5° |
| Ex. 8 | Amphoteric & Nonionic (HLB 3.2) | No occurrence of Visual Distortion | 10 cycles or more | 5° |
| Com. Ex. 1 | None | Minute water drops cause fogging. | 0 cycle | 75° |

(continued)

| | Surfactant Type | Evaluation Item 1 | Evaluation Item 2 | Evaluation Item 3 |
|---|---|---|---|---|
| Com. Ex. 2 | Amphoteric & Nonionic (HLB 12.9) Direct on Mirror Base Member | Minute water drops cause a slight fogging, but a water film is formed by a continued blowing of exhaled air for several seconds. | 0 cycle | 20° |
| Com. Ex. 3 | Amphoteric | No occurrence of Visual Distortion | 1 cycle | 5° |
| Com. Ex. 4 | Anionic | No occurrence of Visual Distortion | 0 cycle | 20° |
| Com. Ex. 5 | Cationic | Minute water drops cause a slight fogging, but a water film is formed by a continued blowing of exhaled air for several seconds. | 0 cycle | 5° |
| Com. Ex. 6 | Anionic & Nonionic (HLB 12.9) | Minute water drops cause a slight fogging, but a water film is formed by a continued blowing of exhaled air for several seconds. | 0 cycle | 20° |
| Com. Ex. 7 | Cationic & Nonionic (HLB 12.9) | Minute water drops cause a slight fogging, but a water film is formed by a continued blowing of exhaled air for several seconds. | 0 cycle | 20° |

*In Table, the surfactant type refers to a surfactant type supported in the film. Amphoteric refers to amphoteric surfactant, nonionic refers to nonionic surfactant, anionic refers to anionic surfactant, and cationic refers to cationic surfactant.

COMPARATIVE EXAMPLE 1

Except that an application liquid for providing hydrophilicity was not applied to the film, an antifogging article was obtained by the same procedure as that of Example 1, and the property evaluations were conducted. The results of the property evaluations of the article are shown in Table 1.

COMPARATIVE EXAMPLE 2

The mirror base member was wiped with a cotton cloth impregnated with an application liquid for providing the film obtained by Example 1 with hydrophilicity, followed by standing still for 24 hours. With this, an antifogging article was obtained, and the same property evaluations as those of Examples were conducted. The results of the property evaluations of the article are shown in Table 1.

COMPARATIVE EXAMPLE 3

Except that nonionic surfactant was not added to the application liquid for providing the film with hydrophilicity, an antifogging article was obtained by the same procedure as that of Example 1, and the property evaluations were conducted. The results of the property evaluations of the article are shown in Table 1.

COMPARATIVE EXAMPLE 4

Except that an anionic surfactant (made by TOHO Chemical Industry Co., LTD., product name: "Alscope NS-230", surfactant concentration: 30%) was used as the surfactant in the application liquid for providing the film with hydrophilicity, an antifogging article was obtained by the same procedure as that of Example 1, and the property evaluations were conducted. The results of the property evaluations of the article are shown in Table 1.

COMPARATIVE EXAMPLE 5

Except that a cationic surfactant (made by TOHO Chemical Industry Co., LTD., product name: "Catinal AOC", surfactant concentration: 30%) was used as the surfactant in the application liquid for providing the film with hydrophilicity, an antifogging article was obtained by the same procedure as that of Example 1, and the property evaluations were conducted. The results of the property evaluations of the article are shown in Table 1.

COMPARATIVE EXAMPLE 6

Except that the amphoteric surfactant, which was a component of the application liquid of Example 1, was replaced with an anionic surfactant (made by TOHO Chemical Industry Co., LTD., product name: "Alscope NS-230", surfactant concentration: 30%), an antifogging article was obtained by the same procedure as that of Example 1, and the property evaluations were conducted. The results of the property evaluations of the article are shown in Table 1.

COMPARATIVE EXAMPLE 7

Except that the amphoteric surfactant, which was a component of the application liquid of Example 1, was replaced with a cationic surfactant (made by TOHO Chemical Industry Co., LTD., product name: "Catinal AOC", surfactant concentration: 30%), an antifogging article was obtained by the same procedure as that of Example 1, and the property evaluations were conducted. The results of the property evaluations of the article are shown in Table 1.

EXAMPLE 9

Except that the nonionic surfactant having an HLB value of 9.7, which was a component of the application liquid of Example 4, was replaced with a nonionic surfactant having an HLB value of 15.4 (made by TOHO Chemical Industry Co., LTD., product name: "Pegnol O20", surfactant concentration: 100%), a pre-antifogging article was obtained by the same procedure as that of Example 4, and the property evaluations were conducted. The results of the property evaluations of the article are shown in Table 2 as "Pre 9". The film of this pre-antifogging article was wiped with a cotton cloth impregnated with an application liquid for providing the film with hydrophilicity that was used in Comparative Example 3, that is, an application liquid having only amphoteric property as the surfactant type, followed by standing still for 24 hours, thereby obtaining an antifogging article. The property evaluations of the antifogging article were conducted. The results of the property evaluations of the article are shown in Table 2.

[Table 2]

|  | Surfactant Type | Evaluation Item 1 | Evaluation Item 2 | Evaluation Item 3 |
|---|---|---|---|---|
| Pre 9 | Nonionic (HLB 15.4) | Minute water drops cause a slight fogging, but a water film is formed by a continued blowing of exhaled air for several seconds. | 2 cycles | 20° |
| Ex. 9 | Amphoteric & Nonionic (HLB 15.4) | No occurrence of Visual Distortion | 10 cycles or more | 5° |
| Pre 10 | Nonionic (HLB 8.6) | Minute water drops cause fogging. | 2 cycles | 75° |
| Ex. 10 | Amphoteric & Nonionic (HLB 8.6) | No occurrence of Visual Distortion | 10 cycles or more | 5° |
| *In Table, the surfactant type refers to a surfactant type supported in the film. Amphoteric refers to amphoteric surfactant, and nonionic refers to nonionic surfactant. | | | | |

EXAMPLE 10

Except that the nonionic surfactant having an HLB value of 9.7, which was a component of the application liquid of Example 4, was replaced with a nonionic surfactant having an HLB value of 8.6 (made by TOHO Chemical Industry Co., LTD., product name: "Pegnol S-4D", surfactant concentration: 100%), a pre-antifogging article was obtained by the same procedure as that of Example 4, and the property evaluations were conducted. The results of the property evaluations of the article are shown in Table 2 as "Pre 10". The film of this pre-antifogging article was wiped with a cotton cloth impregnated with an application liquid for providing the film with hydrophilicity that was used in Comparative Example 3, that is, an application liquid having only amphoteric property as the surfactant type, followed by standing still for 24 hours, thereby obtaining an antifogging article. The property evaluations of the antifogging article were conducted. The results of the property evaluations of the article are shown in Table 2.

## Claims

1. An article with improved antifogging property that shows hydrophilicity, which is **characterized in that** it has a precursor of the article, a nonionic surfactant and an amphoteric surfactant, wherein the precursor of the article has a base member and a film that is formed on the base member and comprises a urethane resin having an oxyethylene chain, wherein the nonionic surfactant having an oxyethylene chain and the amphoteric surfactant are contained in the film comprising the urethane resin, and wherein the film has a water absorption percentage of 10-40 wt%.

2. An article with improved antifogging property showing hydrophilicity according to claim 1, which is **characterized in that** all of the nonionic surfactants contained in the film have hydroxy groups and that the HLB value thereof is 9-14.

3. A process for producing an article with improved antifogging property showing hydrophilicity according to claim 1 or 2, which is **characterized in that** it comprises a step of forming on a base member a film comprising a urethane chain having an oxyethylene chain, wherein the film has a water absorption percentage of 10-40wt%, and a step of introducing a nonionic surfactant having an oxyethylene chain and an amphoteric surfactant at the same time or successively into the film.

4. An application liquid for obtaining an article with improved antifogging property showing hydrophilicity according to claim 1 or 2, wherein the application liquid to be applied onto a film is **characterized in that** it contains a nonionic surfactant having an oxyethylene chain and an amphoteric surfactant.

## Patentansprüche

1. Gegenstand mit verbesserter Beschlagschutzeigenschaft, welcher eine Hydrophilizität aufweist, und, welcher **dadurch gekennzeichnet ist, dass** er einen Vorläufer des Gegenstandes, ein nichtionisches Tensid und ein amphotäres Tensid umfasst, wobei der Vorläufer des Gegenstands ein Basisbauteil und einen Film, welcher auf dem Basisbauteil ausgebildet ist, aufweist und ein Urethanharz mit einer Oxyethylenkette enthält, wobei das nichtionische Tensid mit einer Oxyethylenkette und das amphotäre Tensid in dem das Uretanharz enthaltenen Film enthalten sind, und wobei der Film einen Prozentsatz an Wasserabsorption von 10 bis 40 Gew.-% aufweist.

2. Gegenstand mit verbesserter Beschlagschutzeigenschaft, welcher eine Hydrophilizität aufweist, nach Anspruch 1, welcher **dadurch gekennzeichnet ist, dass** alle der im dem Film enthaltenen nichtionischen Tenside Hydroxygruppen aufweisen, und, dass der HLB-Wert hiervon 9 bis 14 beträgt.

3. Verfahren zum Herstellen eines Gegenstands mit einer verbesserten Beschlagschutzeigenschaft, welcher eine Hydrophilizität aufweist, nach Anspruch 1 oder 2, welcher **dadurch gekennzeichnet ist, dass** er einen Schritt des Bildens eines Films enthaltend eine Urethankette mit einer Oxyethylenkette auf dem Basisbauteil umfasst, wobei der Film einen Prozentsatz an Wasserabsorption von 10 bis 40 Gew.-%aufweist, und, dass dieses einen Schritt des Einführens eines nichtionischen Tensids mit einer Oxyethylenkette und eines amphotären Tensids zur gleichen Zeit oder daran anschließend in den Film umfasst.

4. Aufbringungsflüssigkeit zum Erhalten eines Gegenstands mit einer verbesserten Beschlagschutzeigenschaft, welcher eine Hydrophilizität aufweist, nach Anspruch 1 oder 2, wobei die Aufbringungsflüssigkeit, welche auf einen Film aufzubringen ist, **dadurch gekennzeichnet ist, dass** diese ein nichtionisches Tensid mit einer Oxyethylenkette und ein amphotäres Tensid enthält.

### EP 2 062 861 B1

**Revendications**

1. Article avec propriété antibuée améliorée et présentant un caractère hydrophile, **caractérisé en ce qu'**il comprend un précurseur de l'article, un surfactant non ionique est un surfactant amphotérique, dans lequel le précurseur de l'article comprend un élément de base et un film qui est formé sur l'élément de base et comprend une résine uréthane ayant une chaîne oxyéthylène, dans lequel le surfactant non ionique ayant une chaîne oxyéthylène et le surfactant amphotérique sont contenus dans le film qui comprend la résine uréthane, et dans lequel le film présente un pourcentage d'absorption d'eau de 10 à 40 % en poids.

2. Article avec propriété antibuée améliorée et présentant un caractère hydrophile, selon la revendication 1, **caractérisé en ce que** tous les surfactants non ioniques contenus dans le film comprennent des groupes hydroxy et **en ce que** leur valeur HLB est de 9 à 14.

3. Procédé pour produire un article avec propriété antibuée améliorée et présentant un caractère hydrophile, selon la revendication 1 ou 2, qui est **caractérisé en ce qu'**il comprend une étape consistant à former sur un élément de base un film comprenant une chaîne uréthane ayant une chaîne oxyéthylène, dans lequel le film présente un pourcentage d'absorption d'eau de 10 à 40 % en poids, et une étape consistant à introduire un surfactant non ionique ayant une chaîne oxyéthylène et un surfactant amphotérique en même temps ou successivement dans le film.

4. Liquide d'application pour obtenir un article avec propriété antibuée améliorée et présentant un caractère hydrophile, selon la revendication 1 ou 2, dans lequel le liquide d'application à appliquer sur un film est **caractérisé en ce qu'**il contient un surfactant non ionique ayant une chaîne oxyéthylène et un surfactant amphotérique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4609688 A
- JP 52047926 B
- JP 11100234 A
- JP 2000 A
- JP 265163 A

**Non-patent literature cited in the description**

- Wettability Test Method of Substrate Glass Surface. *JIS R 3257,* 1999